# EUROPEAN PATENT SPECIFICATION

(11) **EP 3 598 388 B1**
(45) Date of publication and mention of the grant of the patent: **01.09.2021**
(21) Application number: 19182849.0
(22) Date of filing: 27.06.2019
(51) Int. Cl.: G06T 7/246, G06T 7/73

(54) **METHOD AND APPARATUS FOR VISUAL ODOMETRY, AND NON-TRANSITORY COMPUTER-READABLE RECORDING MEDIUM**
VERFAHREN UND VORRICHTUNG FÜR DIE VISUELLE ODOMETRIE UND NICHT-FLÜCHTIGES COMPUTERLESBARES AUFZEICHNUNGSMEDIUM
PROCÉDÉ ET APPAREIL D'ODOMÉTRIE VISUELLE ET SUPPORT D'ENREGISTREMENT LISIBLE PAR ORDINATEUR NON TRANSITOIRE

(30) Priority: 16.07.2018 CN 201810775834
(43) Date of publication of application: 22.01.2020
(73) Proprietor: Ricoh Company, Ltd., Tokyo 143-8555 (JP)
(72) Inventor: SU, Xiaoming, Beijing, Beijing 100044 (CN); ZHAO, Ying, Beijing, Beijing 100044 (CN); LIU, Dianchao, Beijing, Beijing 100044 (CN)
(74) Representative: Watkin, Timothy Lawrence Harvey

(56) References cited:
- US-A1- 2015 294 160
- BASAM MUSLEH ET AL: "Visual ego motion estimation in urban environments based on U-V disparity", INTELLIGENT VEHICLES SYMPOSIUM (IV), 2012 IEEE, IEEE, 3 June 2012 (2012-06-03), pages 444-449, XP032452974, DOI: 10.1109/IVS.2012.6232183 ISBN: 978-1-4673-2119-8
- Bihao Wang: "Geometrical and contextual scene analysis for object detection and tracking in intelligent vehicles", , 8 July 2015 (2015-07-08), XP055520808, Retrieved from the Internet: URL:https://tel.archives-ouvertes.fr/tel-0 1296566/file/These_UTC_Bihao_Wang.pdf

## Description

### BACKGROUND OF THE INVENTION

### 1. Field of the Invention

The present invention generally relates to the field of image processing, and specifically, relates to a method and an apparatus for visual odometry, and a non-transitory computer-readable recording medium.

### 2. Description of the Related Art

Methods for visual odometry have been widely used in robot navigation and vehicle navigation, such as intelligent vehicle or UAV (Unmanned Aerial Vehicle). Such methods can measure a distance and a direction of a movement based on visual information, thereby avoiding mismeasurement of a conventional odometry method due to wheel slip of a wheel odometer, avoiding measurement errors of motion parameters due to precision degradation of sensors, and improving measurement accuracy.

In conventional methods for visual odometry, detection and matching for estimating a position and orientation is often performed for all feature points in a captured image. However, in the actual application scenario, if a relative movement with respect to an object of estimation of a position and orientation occurs, mismatching of feature points and estimation errors of the position and orientation will be generated.

The article "Visual Ego Motion Estimation in Urban Environments based on U-V Disparity" by Basam Musleh discloses a stereo-based method for visual odometry on the road where only road feature points are used. Feature points are detected in the image and not taken into account if they belong to obstacles, the obstacles and free space (i.e. the road) being detected based on the U-disparity map.

The PhD thesis "Geometrical and contextual scene analysis for object detection and tracking in intelligent vehicles" by Bihao Wang discloses a method for detecting obstacles in road situations which uses the U-disparity for the initial detection, and the u-disparity and v-disparity to refine the detection.

Accordingly, there is a need to provide an accurate method for visual odometry.

### SUMMARY OF THE INVENTION

According to an aspect of the present invention, a method for visual odometry in accordance with claim 1 is provided.

According to another aspect of the present invention, an apparatus for visual odometry in accordance with claim 8 is provided.

According to another aspect of the present invention, an apparatus for visual odometry in accordance with claim 9 is provided.

According to another aspect of the present invention, a non-transitory computer-readable recording medium having computer-executable instructions for execution by one or more processors in accordance with claim 10 is provided. The computer-executable instructions, when executed, cause the one or more processors to carry out a method for visual odometry. According to the method and the apparatus for visual odometry, and the non-transitory computer-readable recording medium of the present invention, the first moving object region can be obtained based on the disparity map in the captured frame image, and the position and orientation can be estimated by removing corresponding feature points from the feature points of the frame image based on the obtained first moving object region. Thus, in the estimation of the position and orientation according to the above method, apparatus and the non-transitory computer-readable recording medium of the present invention, feature points of specific positions in the captured image can be removed, thereby improving accuracy of estimation of position and orientation, and providing an accurate and robust visual odometry.

### BRIEF DESCRIPTION OF THE DRAWINGS

The embodiments of the present invention will be described in detail with reference to the accompanying drawings, so as to facilitate the understanding of the above and other objects, features and advantages of the present invention.
FIG. 1 is a flowchart illustrating a visual odometry method according to an embodiment of the present invention;
FIG. 2 is a U-disparity map and a V-disparity map, and a corresponding depth image according to an embodiment of the present invention;
FIG. 3 is a schematic drawing illustrating an example of comparison and updating of edge feature points according to an embodiment of the present invention;
FIG. 4 is a schematic drawing illustrating feature points in a first moving object region in a frame image according to an embodiment of the present invention;
FIG. 5 is a block diagram illustrating a visual odometry apparatus according to an embodiment of the present invention; and
FIG. 6 is a block diagram illustrating a visual odometry apparatus according to an embodiment of the present invention.

### DETAILED DESCRIPTION OF THE PREFERRED EMBODIMENTS

In the following, the method and the apparatus for visual odometry, and the non-transitory computer-readable recording medium according to the embodiments of the present invention will be described with reference to the accompanying drawings. In the drawings, the same reference numbers refer to the same elements. It should be noted that, the embodiments described herein are illustrative only and are not intended to limit the scope of the present invention.

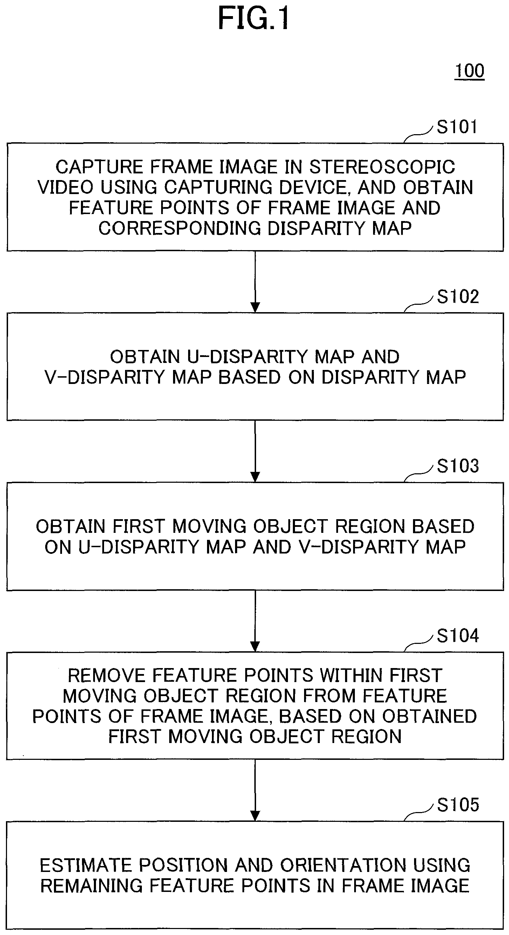

In the following, a visual odometry method according to an embodiment of the present invention will be described with reference to FIG. 1. FIG. 1 is a flowchart illustrating the visual odometry method 100 according to the embodiment of the present invention.

As shown in FIG. 1, in step S101, a frame image in a stereoscopic video is captured using a capturing device, and feature points of the frame image and a corresponding disparity map are obtained.

In this step, the frame image in the stereoscopic video may be obtained using the capturing device capable of capturing the stereoscopic video. For example, a left image or a right image of a frame in the stereoscopic video may be obtained using a binocular camera, respectively, and the left image or the right image may be used as the frame image. In an example, the frame image may be the left image.

After the frame image is captured, the feature points of the frame image may be obtained by performing feature point detection on the frame image. In an example, the detection methods of the feature points may include various detection methods of feature points such as SIFT features, SURF features, Harris corner points and the like. After the feature points are detected, the detected feature points may be described, and description methods may include various methods for describing features such as grayscale features, gradient features, disparity information and the like.

Furthermore, after the frame image is captured, the disparity map corresponding to the frame image in the stereoscopic video may also be obtained. The disparity map is an image whose reference is an image, whose size is the size of the reference image, and whose element values are disparity values. The disparity map includes distance information of a scene. The disparity map may be calculated based on the left image and the right image of a frame in the stereoscopic video.

In step S102, a U-disparity map and a V-disparity map are obtained based on the disparity map.

The U-disparity map in this step may be regarded as a top view of the disparity map, and the V-disparity map may be regarded as a side view of the disparity map. The U-disparity map and the V-disparity map may be calculated from the disparity map. Specifically, coordinates of a point of a common two-dimensional disparity map may be represented as (u, v, d), where u is the abscissa, v is the ordinate, and d is the disparity of the point (u, v). On the basis of this, the grayscale value of any point (u, d) in the U-disparity map is the number of the points in the corresponding disparity map whose abscissa is u and disparity value is equal to d. "U" of the U-disparity map corresponds to the abscissa u in a (u,v) image coordinate system. The point (u, v, d) in the disparity map is projected onto the point (u, d) in the U-disparity map. Similarly, the grayscale value of any point (d, v) in the V-disparity map is the number of the points in the corresponding disparity map whose ordinate is v and disparity value is equal to d. "V" of the V-disparity map corresponds to the ordinate v in the (u,v) image coordinate system. The point (u, v, d) in the disparity map is projected onto the point (v, d) in the V-disparity map.

In step S103, a first moving object region is obtained based on the U-disparity map and the V-disparity map.

In the actual application, it may be determined whether it is necessary to obtain the first moving object region based on the U-disparity map and the V-disparity map, after performing preliminary determination on a calculation result of a position and orientation of all feature points of the frame image in the stereoscopic video. Specifically, a position and orientation may be estimated, using the feature points of the frame image, and feature points of an adjacent frame image adjacent to the frame image or feature points of an interval frame image whose interval between the interval frame image and the frame image is at least one frame; the estimation result of the position and orientation may be compared with motion information (such as a speed, a yawrate or the like) of a second moving object provided with the capturing device (such as a vehicle provided with the capturing device); and it may be determined that the first moving object region is obtained based on the U-disparity map and the V-disparity map, when the comparison result is greater than a predetermined estimation threshold. In this example, the specific estimation method of the position and orientation may be a method of calculating a motion estimation matrix based on at least one matched feature point pair so as to calculate the rotation and the displacement of the second moving object. The matched feature point pair is formed by the feature points of the frame image, and feature points of an adjacent frame image adjacent to the frame image or feature points of an interval frame image whose interval between the interval frame image and the frame image is at least one frame. The motion estimation matrix used herein may include a rotation matrix R and a displacement matrix T. The motion estimation method may be a motion estimation method based on a quaternion or a motion estimation method based on RANSAC, and may also be another common motion estimation method. Furthermore, the above estimation method of the position and orientation using the feature points of the frame image and the feature points of the adjacent frame image or the interval frame image is only an example. For example, in practical applications, the estimation method of the position and orientation according to the embodiment of the present invention may use the frame image and the adjacent frame image adjacent to the frame image, may also use the frame image and the interval frame image whose interval between the interval frame image and the frame image is at least one frame, and the number of frames in the interval between the interval frame image and the frame image is not limited.

After the estimation result of the position and orientation of second moving object based on all feature points of the frame image is compared with the motion information of the second moving object obtained by, for example, a sensor or an odometer, if there is a relatively great deviation between the above estimation result and the motion information, it means that there are feature points of an object with a relatively high speed with respect to the second moving object (i.e., a first moving object) in the frame image. If matching of feature points and the estimation of the position and orientation of the second moving object are performed using these feature points, an error of the estimation of the position and orientation of the second moving object may occur, resulting in an inaccurate result. For example, when performing the estimation of the position and orientation of the second moving object using the matched feature point pairs of the frame image, it is generally assumed that reference objects existing in the image are stationary (such as roads, trees and the like); however, in practical scenes, a moving vehicle near the second moving object or an oncoming vehicle opposing to the second moving object may not be stationary, and there may be a large difference in relative speed with respect to the second moving object. Therefore, if a large enough number of feature points of a vehicle with a relatively high speed are used in the estimation process, these feature points may seriously affect the actual result of the estimation of the position and orientation. Accordingly, in the embodiment of the present invention, in order to further improve the accuracy of the estimation of the position and orientation of the second moving object, the feature points of the portion of the first moving object region are removed from the feature points of the frame image.

Specifically, in an embodiment of the present invention, it may be determined whether a region where an object is located is the first moving object region, based on at least one of a width, a height, and an aspect ratio of the object detected from the U-disparity map and the V-disparity map. In an example, the first moving object may be a moving vehicle near the second moving object. In this case, it may be determined whether the object is a vehicle, based on at least one of a width, a height, and an aspect ratio in the pre-obtained U-disparity map and V-disparity map corresponding to a size of a vehicle. If it is determined that the object is a vehicle based on the above determination result, it is determined that the region where the object is located is the first moving object region. Furthermore, for example, in order to determine the attribute of an object more accurately, it may be determined whether an object is the first moving object, by determining the true value of a width and/or a height of the object based on depth information, using a disparity map and/or a depth image corresponding to the frame image. As another example, a road region in the frame image may be determined based on the frame image and/or the corresponding disparity map (or further including the U-disparity map, the V-disparity map and the like), and the attribute of the object may be determined based on the relative positional relationship between the object and the road region. Alternatively, when the object is located in the road region and a condition of at least one of a width, a height and an aspect ratio is satisfied, it is determined that the object is the first moving object; and when the object is located outside the road region, it is determined that the object is not the first moving object. In an example, pixel points with a specific grayscale value in each column of the U-disparity map may be selected, a line segment may be obtained by performing fitting using the selected pixel points, and the width of the object may be obtained based on the line segment. Similarly, pixel points with a specific grayscale value in each row of the V-disparity map may be selected, a line segment may be obtained by performing fitting using the selected pixel points, and the height of the object may be obtained based on the line segment. The aspect ratio may be a ratio of the obtained width of the object to the obtained height of the object. In practical applications, the specific grayscale value may be a grayscale value less than a threshold.

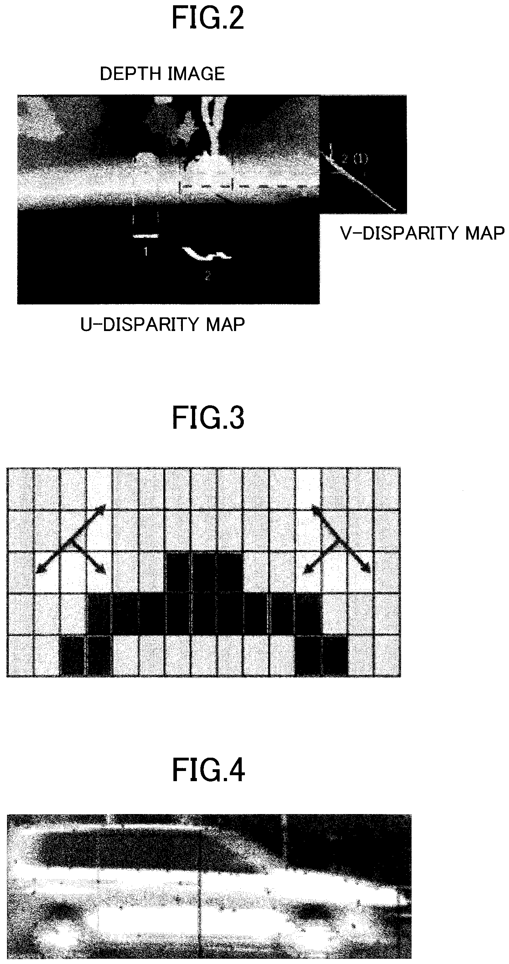

In an example, it may further be determined whether an object existing in the frame image is occluded in the V-disparity map, based on the U-disparity map. When there is an occluded object, it is determined whether a region where the occluded object is located is the first moving object region, based on at least one of a width, a height, and an aspect ratio of the occluded object. FIG. 2 is a U-disparity map and a V-disparity map, and a corresponding depth image according to an embodiment of the present invention. As shown in FIG. 2, "1" and "2" in the U-disparity map and the V-disparity map represent two objects, respectively. As shown in the V-disparity map, the height of object 1 in the V-disparity map is completely occluded by object 2, accordingly the existence of object 1 cannot be known from the V-disparity map. Meanwhile, it can be obviously seen from the U-disparity map that there are two separate objects in the image. Accordingly, it may be determined whether an object existing in the frame image is occluded in the V-disparity map, based on the U-disparity map. When it is determined that there is the occluded object, the width and the specific position of the occluded object may be obtained from the U-disparity map, and the height of the occluded object may be obtained by iteratively searching the depth image (or the disparity map) for the same region. Furthermore, after the width and the height of the object are obtained, the attribute of the occluded object may be determined using the above method (for example, a method based on factors such as a width, a height and an aspect ratio, depth information, a road region and the like).

Alternatively, when the first moving object region is obtained based on the U-disparity map and the V-disparity map, the initially obtained first moving object region may also be optimized. Specifically, at least one of grayscale values and depth values of one or more edge feature points at an edge of the first moving object region may be compared with at least one of grayscale values and depth values of one or more adjacent feature points in the first moving object region that are adjacent to the edge feature points. When the comparison result satisfies a predetermined comparison threshold, the edge feature points may be updated using the compared adjacent feature points serving as new edge feature points, and the first moving object region may be optimized using the updated edge feature points. FIG. 3 is a schematic drawing illustrating an example of comparison and updating of edge feature points according to an embodiment of the present invention. The two intersections of the two arrows in FIG. 3 represent the positions of the two edge feature points, respectively. After the grayscale values of the two edge feature points are compared with the grayscale values of the light-colored adjacent feature points in the first moving object region that are adjacent to the edge feature points, when the comparison result shows that the change of grayscale values is small, the edge feature points may be updated using the compared light-colored adjacent feature points serving as new edge feature points, and the first moving object region may be limited to a region defined by the new edge feature points. In the above example, the predetermined comparison threshold satisfied by the comparison result may be a predetermined range of grayscale values or depth values, and for example, it may be determined whether the difference of the grayscale values obtained by the comparison is less than 30 or 50. Furthermore, a similar comparison operation may be performed on the new edge feature points, and the first moving object region may be continuously updated based on the comparison result. For example, a similar comparison operation may be performed again on the light-colored feature points pointed by the directions of the arrows, and the updating may be iteratively performed up to the black region in the lower part of FIG. 3. When it is determined that the predetermined comparison threshold requirement of the grayscale values is not satisfied by the feature points of the black region, it may be ultimately determined that the black region is the first moving object region, and the updating is performed no longer. After the first moving object region is determined, the feature points inside the first moving object region may be removed to improve the accuracy of the estimation of the position and orientation in the subsequent step. FIG. 4 is a schematic drawing illustrating feature points in a first moving object region in a frame image according to an embodiment of the present invention. As shown in FIG. 4, a plurality of feature points are distributed in the first moving object region where a vehicle moving at a high speed is located. The comparison of the edge feature points may be performed from, for example, the upper right corner of the first moving object region, and the edge feature points may be gradually updated toward the center of the region, namely, the position where the vehicle is located. The comparison result may not satisfy the predetermined comparison threshold, until the updated edge feature points fall in a region in the vicinity of the boundary line of the vehicle shown in FIG. 4. Accordingly, the first moving object region may be finally limited to a vehicle edge region, so as to obtain a more accurate detection result of the first moving object region. The above comparison of the edge feature points and the adjacent feature points is only an example. In practical applications, the edge feature points may be compared with feature points in a certain range around the edge feature points, and feature points for the comparison are not limited to the adjacent feature points.

In step S104, feature points within the first moving object region are removed from the feature points of the frame image, based on the obtained first moving object region.

In this step, in order to eliminate the influence of the feature points in the first moving object region on the estimation of the position and orientation of the second moving object as much as possible, the feature points within the first moving object region may be removed from the feature points of the frame image. For example, all of the feature points in the region of FIG. 4 where the vehicle moving at a high speed is located may be removed, and only the feature points on the outside of the vehicle in the frame image may be retained.

In step S105, a position and orientation is estimated using remaining feature points in the frame image.

In this step, after the feature points in the first moving object region are removed, the position and orientation may be estimated using only the remaining feature points in the frame image, so as to improve the accuracy of the estimation of the position and orientation. Specifically, a motion estimation matrix may be calculated, based on at least one matched feature point pair of the feature points of the frame image, and feature points of an adjacent frame image adjacent to the frame image or feature points of an interval frame image whose interval between the interval frame image and the frame image is at least one frame. The motion estimation matrix includes a rotation matrix and a displacement matrix. Furthermore, as described above, the above estimation method of the position and orientation using the feature points of the frame image and the feature points of the adjacent frame image or the interval frame image is only an example. The estimation method of the position and orientation according to the embodiment of the present invention may use the frame image and the adjacent frame image adjacent to the frame image, may also use the frame image and the interval frame image whose interval between the interval frame image and the frame image is at least one frame, and the present invention is not limited to these examples. The motion estimation matrix used herein may include the rotation matrix R, the displacement matrix T and the like. For example, the matrix of rotation and displacement (R, T) estimated using the motion information may include six DOFs (Degree of Freedom), namely rx, ry, rz, tx, ty and tz. Here, rx, ry and rz represent rotational DOFs in three directions of x, y and z, and tx, ty and tz represent translational DOFs in three directions of x, y and z. The motion estimation method in the embodiment of the present invention may be a motion estimation method based on a quaternion or a motion estimation method based on RANSAC, and may also be another common motion estimation method.

In an example of the present invention, the step of removing the feature points from the frame image and the step of estimating the position and orientation using the remaining feature points in the frame image may be performed after a step of performing matching of feature points. That is to say, in the example, the step of obtaining the feature points of the frame image in the stereoscopic video and the corresponding disparity map may include: performing matching of the feature points, using the feature points of the frame image, and feature points of an adjacent frame image adjacent to the frame image or feature points of an interval frame image whose interval between the interval frame image and the frame image is at least one frame, so as to obtain at least one matched feature point pair. Correspondingly, after the matched feature point pair is obtained by performing the matching of all of the feature points of the frame image and the feature points of the adjacent frame image (or the interval frame image whose interval between the interval frame image and the frame image is at least one frame), the step of estimating the position and orientation using the remaining feature points in the frame image may include: estimating the position and orientation using the matched feature point pair corresponding to the remaining feature points in the frame image. Thus, the corresponding matched feature point pair can be removed together with all of the feature points in the first moving object region, and the estimation of the position and orientation can be performed using only the matched feature point pair corresponding to the remaining feature points, thereby improving the accuracy of the estimation of the position and orientation.

In another example of the present invention, the step of removing the feature points in the first moving object region from the frame image may be performed before the step of performing matching of the feature points and the step of estimating the position and orientation. Specifically, the step of estimating the position and orientation using the remaining feature points in the frame image may include: performing matching of the feature points, using the remaining feature points in the frame image, and feature points of an adjacent frame image adjacent to the frame image or feature points of an interval frame image whose interval between the interval frame image and the frame image is at least one frame; and estimating the position and orientation using at least one matched feature point pair obtained by the matching. In this example, the feature points in the first moving object region may be first removed, before performing the matching of all of the feature points in the frame image. After removing the feature points, the matching is performed using the remaining feature points, thereby improving computational efficiency and saving computational resources.

According to the visual odometry method of the embodiment of the present invention, the first moving object region can be obtained based on the disparity map in the captured frame image, and the position and orientation can be estimated by removing corresponding feature points from the feature points of the frame image based on the obtained first moving object region. Thus, in the estimation of the position and orientation according to the above method of the present invention, feature points of specific positions in the captured image can be removed, thereby improving accuracy of estimation of position and orientation, and providing an accurate and robust visual odometry.

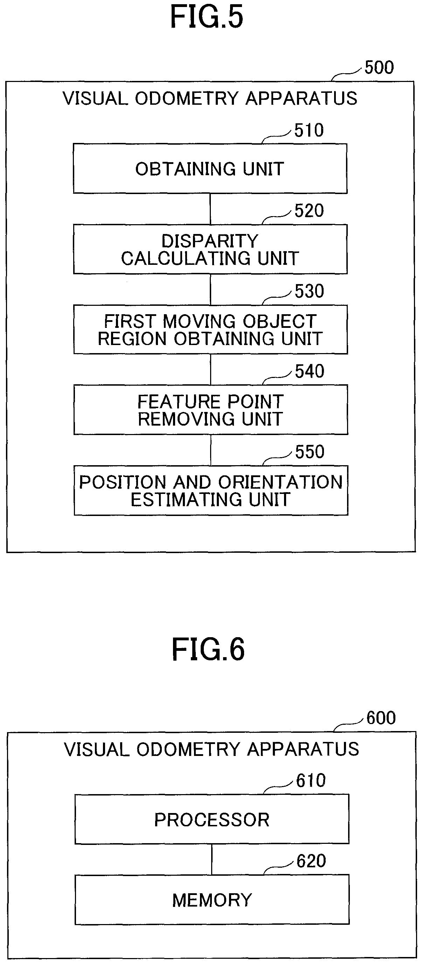

Next, a visual odometry apparatus according to an embodiment of the present invention will be described with reference to FIG. 5. FIG. 5 is a block diagram illustrating a visual odometry apparatus 500 according to an embodiment of the present invention. As shown in FIG. 5, the visual odometry apparatus 500 includes an obtaining unit 510, a disparity calculating unit 520, a first moving object region obtaining unit 530, a feature point removing unit 540, and a position and orientation estimating unit 550. In addition to these units, the visual odometry apparatus 500 may include other components; however, since these components are not related to the content of the embodiment of the present invention, illustration and description thereof are omitted herein. Furthermore, since the specific details of the following operations performed by the visual odometry apparatus 500 according to the embodiment of the present invention are the same as those described above with reference to FIGs. 1 to 4, the repetitive description of the same details is omitted here.

The obtaining unit 510 of the visual odometry apparatus 500 in FIG. 5 captures a frame image in a stereoscopic video using a capturing device, and obtains feature points of the frame image and a corresponding disparity map.

The obtaining unit 510 may obtain the frame image in the stereoscopic video using the capturing device capable of capturing the stereoscopic video. For example, a left image or a right image of a frame in the stereoscopic video may be obtained using a binocular camera, respectively, and the left image or the right image may be used as the frame image. In an example, the frame image may be the left image.

After the frame image is captured, the obtaining unit 510 may obtain the feature points of the frame image by performing feature point detection on the frame image. In an example, the detection methods of the feature points may include various detection methods of feature points such as SIFT features, SURF features, Harris corner points and the like. After the feature points are detected, the detected feature points may be described, and description methods may include various methods for describing features such as grayscale features, gradient features, disparity information and the like.

Furthermore, after the frame image is captured, the disparity map corresponding to the frame image in the stereoscopic video may also be obtained. The disparity map is an image whose reference is an image, whose size is the size of the reference image, and whose element values are disparity values. The disparity map includes distance information of a scene. The disparity map may be calculated based on the left image and the right image of a frame in the stereoscopic video.

The disparity calculating unit 520 obtains a U-disparity map and a V-disparity map based on the disparity map.

The U-disparity map obtained by the disparity calculating unit 520 may be regarded as a top view of the disparity map, and the V-disparity map may be regarded as a side view of the disparity map. The U-disparity map and the V-disparity map may be calculated from the disparity map. Specifically, coordinates of a point of a common two-dimensional disparity map may be represented as (u, v, d), where u is the abscissa, v is the ordinate, and d is the disparity of the point (u, v). On the basis of this, the grayscale value of any point (u, d) in the U-disparity map is the number of the points in the corresponding disparity map whose abscissa is u and disparity value is equal to d. "U" of the U-disparity map corresponds to the abscissa u in a (u,v) image coordinate system. The point (u, v, d) in the disparity map is projected onto the point (u, d) in the U-disparity map. Similarly, the grayscale value of any point (d, v) in the V-disparity map is the number of the points in the corresponding disparity map whose ordinate is v and disparity value is equal to d. "V" of the V-disparity map corresponds to the ordinate v in the (u,v) image coordinate system. The point (u, v, d) in the disparity map is projected onto the point (v, d) in the V-disparity map.

The first moving object region obtaining unit 530 obtains a first moving object region based on the U-disparity map and the V-disparity map.

In the actual application, the first moving object region obtaining unit 530 may determine whether it is necessary to obtain the first moving object region based on the U-disparity map and the V-disparity map, after performing preliminary determination on a calculation result of a position and orientation of all feature points of the frame image in the stereoscopic video. Specifically, a position and orientation may be estimated, using the feature points of the frame image, and feature points of an adjacent frame image adjacent to the frame image or feature points of an interval frame image whose interval between the interval frame image and the frame image is at least one frame; the estimation result of the position and orientation may be compared with motion information (such as a speed, a yawrate or the like) of a second moving object provided with the capturing device (such as a vehicle provided with the capturing device); and may determine that the first moving object region is obtained based on the U-disparity map and the V-disparity map, when the comparison result is greater than a predetermined estimation threshold. In this example, the specific estimation method of the position and orientation may be a method of calculating a motion estimation matrix based on at least one matched feature point pair so as to calculate the rotation and the displacement of the second moving object. The matched feature point pair is formed by the feature points of the frame image, and feature points of an adjacent frame image adjacent to the frame image or feature points of an interval frame image whose interval between the interval frame image and the frame image is at least one frame. The motion estimation matrix used herein may include a rotation matrix R and a displacement matrix T. The motion estimation method may be a motion estimation method based on a quaternion or a motion estimation method based on RANSAC, and may also be another common motion estimation method. Furthermore, the above estimation method of the position and orientation using the feature points of the frame image and the feature points of the adjacent frame image or the interval frame image is only an example. For example, in practical applications, the estimation method of the position and orientation according to the embodiment of the present invention may use the frame image and the adjacent frame image adjacent to the frame image, may also use the frame image and the interval frame image whose interval between the interval frame image and the frame image is at least one frame, and the number of frames in the interval between the interval frame image and the frame image is not limited.

After the first moving object region obtaining unit 530 compares the estimation result of the position and orientation of the second moving object based on all feature points of the frame image with the motion information of the second moving object obtained by, for example, a sensor or an odometer, if there is a relatively great deviation between the above estimation result and the motion information, it means that there are feature points of an object with a relatively high speed with respect to the second moving object (i.e., a first moving object) in the frame image. If matching of feature points and the estimation of the position and orientation of the second moving object are performed using these feature points, an error of the estimation of the position and orientation of the second moving object may occur, resulting in an inaccurate result. For example, when performing the estimation of the position and orientation of the second moving object using the matched feature point pairs of the frame image, it is generally assumed that reference objects existing in the image are stationary (such as roads, trees and the like); however, in practical scenes, a moving vehicle near the second moving object or an oncoming vehicle opposing to the second moving object may not be stationary, and there may be a large difference in relative speed with respect to the second moving object. Therefore, if a large enough number of feature points of a vehicle with a relatively high speed are used in the estimation process, these feature points may seriously affect the actual result of the estimation of the position and orientation. Accordingly, in the embodiment of the present invention, in order to further improve the accuracy of the estimation of the position and orientation of the second moving object, the feature points of the portion of the first moving object region are removed from the feature points of the frame image.

Specifically, in an embodiment of the present invention, the first moving object region obtaining unit 530 may determine whether a region where an object is located is the first moving object region, based on at least one of a width, a height, and an aspect ratio of the object detected from the U-disparity map and the V-disparity map. In an example, the first moving object may be a moving vehicle near the second moving object. In this case, it may be determined whether the object is a vehicle, based on at least one of a width, a height, and an aspect ratio in the pre-obtained U-disparity map and V-disparity map corresponding to a size of a vehicle. If it is determined that the object is a vehicle based on the above determination result, it is determined that the region where the object is located is the first moving object region. Furthermore, for example, in order to determine the attribute of an object more accurately, it may be determined whether an object is the first moving object, by determining the true value of a width and/or a height of the object based on depth information, using a disparity map and/or a depth image corresponding to the frame image. As another example, a road region in the frame image may be determined based on the frame image and/or the corresponding disparity map (or further including the U-disparity map, the V-disparity map and the like), and the attribute of the object may be determined based on the relative positional relationship between the object and the road region. Alternatively, when the object is located in the road region and a condition of at least one of a width, a height and an aspect ratio is satisfied, it is determined that the object is the first moving object; and when the object is located outside the road region, it is determined that the object is not the first moving object. In an example, pixel points with a specific grayscale value in each column of the U-disparity map may be selected, a line segment may be obtained by performing fitting using the selected pixel points, and the width of the object may be obtained based on the line segment. Similarly, pixel points with a specific grayscale value in each row of the V-disparity map may be selected, a line segment may be obtained by performing fitting using the selected pixel points, and the height of the object may be obtained based on the line segment. The aspect ratio may be a ratio of the obtained width of the object to the obtained height of the object. In practical applications, the specific grayscale value may be a grayscale value less than a threshold.

In an example, it may further be determined whether an object existing in the frame image is occluded in the V-disparity map, based on the U-disparity map. When there is an occluded object, it is determined whether a region where the occluded object is located is the first moving object region, based on at least one of a width, a height, and an aspect ratio of the occluded object. FIG. 2 is the U-disparity map and the V-disparity map, and the corresponding depth image according to an embodiment of the present invention. As shown in FIG. 2, "1" and "2" in the U-disparity map and the V-disparity map represent two objects, respectively. As shown in the V-disparity map, the height of object 1 in the V-disparity map is completely occluded by object 2, accordingly the existence of object 1 cannot be known from the V-disparity map. Meanwhile, it can be obviously seen from the U-disparity map that there are two separate objects in the image. Accordingly, it may be determined whether an object existing in the frame image is occluded in the V-disparity map, based on the U-disparity map. When it is determined that there is the occluded object, the width and the specific position of the occluded object may be obtained from the U-disparity map, and the height of the occluded object may be obtained by iteratively searching the depth image (or the disparity map) for the same region. Furthermore, after the width and the height of the object are obtained, the attribute of the occluded object may be determined using the above method (for example, a method based on factors such as a width, a height and an aspect ratio, depth information, a road region and the like).

Alternatively, when the first moving object region is obtained based on the U-disparity map and the V-disparity map, the initially obtained first moving object region may also be optimized. Specifically, at least one of grayscale values and depth values of one or more edge feature points at an edge of the first moving object region may be compared with at least one of grayscale values and depth values of one or more adjacent feature points in the first moving object region that are adjacent to the edge feature points. When the comparison result satisfies a predetermined comparison threshold, the edge feature points may be updated using the compared adjacent feature points serving as new edge feature points, and the first moving object region may be optimized using the updated edge feature points. FIG. 3 is the schematic drawing illustrating the example of the comparison and updating of the edge feature points according to the embodiment of the present invention. The two intersections of the two arrows in FIG. 3 represent the positions of the two edge feature points, respectively. After the grayscale values of the two edge feature points are compared with the grayscale values of the light-colored adjacent feature points in the first moving object region that are adjacent to the edge feature points, when the comparison result shows that the change of grayscale values is small, the edge feature points may be updated using the compared light-colored adjacent feature points serving as new edge feature points, and the first moving object region may be limited to a region defined by the new edge feature points. In the above example, the predetermined comparison threshold satisfied by the comparison result may be a predetermined range of grayscale values or depth values, and for example, it may be determined whether the difference of the grayscale values obtained by the comparison is less than 30 or 50. Furthermore, a similar comparison operation may be performed on the new edge feature points, and the first moving object region may be continuously updated based on the comparison result. For example, a similar comparison operation may be performed again on the light-colored feature points pointed by the directions of the arrows, and the updating may be iteratively performed up to the black region in the lower part of FIG. 3. When it is determined that the predetermined comparison threshold requirement of the grayscale values is not satisfied by the feature points of the black region, it may be ultimately determined that the black region is the first moving object region, and the updating is performed no longer. After the first moving object region is determined, the feature points inside the first moving object region may be removed to improve the accuracy of the estimation of the position and orientation in the subsequent step. FIG. 4 is the schematic drawing illustrating the feature points in the first moving object region in the frame image according to the embodiment of the present invention. As shown in FIG. 4, a plurality of feature points are distributed in the first moving object region where a vehicle moving at a high speed is located. The comparison of the edge feature points may be performed from, for example, the upper right corner of the first moving object region, and the edge feature points may be gradually updated toward the center of the region, namely, the position where the vehicle is located. The comparison result may not satisfy the predetermined comparison threshold, until the updated edge feature points fall in a region in the vicinity of the boundary line of the vehicle shown in FIG. 4. Accordingly, the first moving object region may be finally limited to a vehicle edge region, so as to obtain a more accurate detection result of the first moving object region. The above comparison of the edge feature points and the adjacent feature points is only an example. In practical applications, the edge feature points may be compared with feature points in a certain range around the edge feature points, and feature points for the comparison are not limited to the adjacent feature points.

The feature point removing unit 540 removes feature points within the first moving object region from the feature points of the frame image, based on the obtained first moving object region.

In this step, in order to eliminate the influence of the feature points in the first moving object region on the estimation of the position and orientation of the second moving object as much as possible, the feature point removing unit 540 may remove the feature points within the first moving object region from the feature points of the frame image. For example, all of the feature points in the region of FIG. 4 where the vehicle moving at a high speed is located may be removed by the feature point removing unit 540, and only the feature points on the outside of the vehicle in the frame image may be retained.

The position and orientation estimating unit 500 estimates a position and orientation using remaining feature points in the frame image.

After the feature points in the first moving object region are removed, the position and orientation estimating unit 500 may estimate the position and orientation using only the remaining feature points in the frame image, so as to improve the accuracy of the estimation of the position and orientation. Specifically, a motion estimation matrix may be calculated, based on at least one matched feature point pair of the feature points of the frame image, and feature points of an adjacent frame image adjacent to the frame image or feature points of an interval frame image whose interval between the interval frame image and the frame image is at least one frame. The motion estimation matrix includes a rotation matrix and a displacement matrix. Furthermore, as described above, the above estimation method of the position and orientation using the feature points of the frame image and the feature points of the adjacent frame image or the interval frame image is only an example. The estimation method of the position and orientation according to the embodiment of the present invention may use the frame image and the adjacent frame image adjacent to the frame image, may also use the frame image and the interval frame image whose interval between the interval frame image and the frame image is at least one frame, and the present invention is not limited to these examples. The motion estimation matrix used herein may include the rotation matrix R, the displacement matrix T and the like. For example, the matrix of rotation and displacement (R, T) estimated using the motion information may include six DOFs (Degree of Freedom), namely rx, ry, rz, tx, ty and tz. Here, rx, ry and rz represent rotational DOFs in three directions of x, y and z, and tx, ty and tz represent translational DOFs in three directions of x, y and z. The motion estimation method in the embodiment of the present invention may be a motion estimation method based on a quaternion or a motion estimation method based on RANSAC, and may also be another common motion estimation method.

In an example of the present invention, the step of removing the feature points from the frame image and the step of estimating the position and orientation using the remaining feature points in the frame image may be performed after a step of performing matching of feature points. That is to say, in the example, the obtaining unit 510 may perform matching of the feature points, using the feature points of the frame image, and feature points of an adjacent frame image adjacent to the frame image or feature points of an interval frame image whose interval between the interval frame image and the frame image is at least one frame, so as to obtain at least one matched feature point pair. Correspondingly, after the matched feature point pair is obtained by performing the matching of all of the feature points of the frame image and the feature points of the adjacent frame image (or the interval frame image whose interval between the interval frame image and the frame image is at least one frame), the position and orientation estimating unit 500 may estimate the position and orientation using the matched feature point pair corresponding to the remaining feature points in the frame image. Thus, the corresponding matched feature point pair can be removed together with all of the feature points in the first moving object region, and the estimation of the position and orientation can be performed using only the matched feature point pair corresponding to the remaining feature points, thereby improving the accuracy of the estimation of the position and orientation.

In another example of the present invention, the step of removing the feature points in the first moving object region from the frame image may be performed before the step of performing matching of the feature points and the step of estimating the position and orientation. Specifically, the position and orientation estimating unit 500 may perform matching of the feature points, using the remaining feature points in the frame image, and feature points of an adjacent frame image adjacent to the frame image or feature points of an interval frame image whose interval between the interval frame image and the frame image is at least one frame; and may estimate the position and orientation using at least one matched feature point pair obtained by the matching. In this example, the feature points in the first moving object region may be first removed, before performing the matching of all of the feature points in the frame image. After removing the feature points, the matching is performed using the remaining feature points, thereby improving computational efficiency and saving computational resources.

According to the visual odometry apparatus of the embodiment of the present invention, the first moving object region can be obtained based on the disparity map in the captured frame image, and the position and orientation can be estimated by removing corresponding feature points from the feature points of the frame image based on the obtained first moving object region. Thus, in the estimation of the position and orientation according to the above method of the present invention, feature points of specific positions in the captured image can be removed, thereby improving accuracy of estimation of position and orientation, and providing an accurate and robust visual odometry.

Next, a visual odometry apparatus according to an embodiment of the present invention will be described with reference to FIG. 6. FIG. 6 is a block diagram illustrating a visual odometry apparatus 600 according to an embodiment of the present invention. As shown in FIG. 6, the visual odometry apparatus 600 may be a computer or a server.

As shown in FIG. 6, the visual odometry apparatus 600 includes one or more processors 610, and a memory 620. It should be noted that, the visual odometry apparatus 600 may further include an input device, an output device and the like (not shown). These components may be interconnected by a bus system and/or another form of connection mechanism. It should be noted that, the components and structures of the visual odometry apparatus 600 shown in FIG. 6 are merely exemplary and not limiting, and the visual odometry apparatus 600 may have other components and structures as desired.

The processor 610 may be a central processing unit (CPU) or another form of processing unit having data processing capabilities and/or instruction execution capabilities, and may utilize computer program instructions stored in the memory 620 to perform desired functions. The processor 610 may be configured to capture a frame image in a stereoscopic video using a capturing device, and obtain feature points of the frame image and a corresponding disparity map; obtain, based on the disparity map, a U-disparity map and a V-disparity map; obtain, based on the U-disparity map and the V-disparity map, a first moving object region; remove feature points within the first moving object region from the feature points of the frame image, based on the obtained first moving object region; and estimate, using remaining feature points in the frame image, a position and orientation.

The memory 620 may include one or more computer program products, and the computer program products may include various forms of computer readable storage media, such as volatile memory and/or nonvolatile memory. One or more computer program instructions may be stored in the computer readable storage medium, and the processor 610 may execute the program instructions to implement the functions of the visual odometry apparatus of the embodiments of the invention described above and/or other desired functions, and/or may perform the visual odometry method of the embodiments of the present invention. Various application programs and various data may also be stored in the computer readable storage medium.

Next, a non-transitory computer-readable recording medium according to an embodiment of the present invention will be described. The non-transitory computer-readable recording medium has computer-executable instructions for execution by one or more processors. When the computer-executable instructions are executed, the computer-executable instructions cause the one or more processors to carry out a method for visual odometry. The method includes capturing a frame image in a stereoscopic video using a capturing device, and obtaining feature points of the frame image and a corresponding disparity map; obtaining, based on the disparity map, a U-disparity map and a V-disparity map; obtaining, based on the U-disparity map and the V-disparity map, a first moving object region; removing feature points within the first moving object region from the feature points of the frame image, based on the obtained first moving object region; and estimating, using remaining feature points in the frame image, a position and orientation.

It should be noted that, the above specific embodiments are just examples and the present invention is not limited to these embodiments. A person skilled in the art may merge and combine the steps and apparatuses separately described in the embodiments according to the concept of the present invention to achieve the effect of the present invention. The above embodiments obtained by the merging and combination are included in the present invention as defined by the claims and their descriptions are omitted here.

It should be noted that, the advantages, benefits and effects described in the present specification are just examples, the present invention is not limited to these examples, and it cannot be considered that these advantages, benefits and effects are required by the embodiments of the present invention. Furthermore, the specific content of the present specification is only for description and understanding rather than limitation, and the present invention is not limited to specific content.

The block diagrams of the units, apparatuses, devices and system are just examples, the connection, placement and configuration illustrated in the block diagrams related to the present invention are not limited to these examples, and the units, apparatuses, devices and system may be connected, placed or configured in any way. The terms "comprise", "include" and "have" are open-form terms, which mean and may be changed into "include and is not limited to". The terms "or" and "and" mean and may be changed into "and/or", unless the context is clearly not applicable. The term "such as" means and may be changed to "such as, but not limited to".

The flowchart and the method according to the present invention are just examples, and not limited to the steps in the embodiments. The steps of the embodiments may be performed in any order. The terms "next", "subsequently" and "then" are just for describing the present invention, and the present invention is not limited to these terms. Furthermore, the articles "a", "an" and "the" should not be limited to the singular element.

The steps or apparatuses of the present invention are described above. The above descriptions of the embodiments are just examples, and various modifications, replacements or combinations may be made without departing from the scope of the present invention defined by the appended claims.

The steps of the above method may be performed by any appropriate means that can perform the corresponding functions. The means may include any components and/or modules of hardware and/or software, and include but are not limited to a circuit, a dedicated application-specific integrated circuit (ASIC) or a processor.

The present invention may use a general-purpose processor, a digital signal processor (DSP), an ASIC, a field programmable gate array (FPGA) or other programmable logic device (PLD), a discrete gate or transistor logic, discrete hardware components or any other combination for executing the functions to realize the logic blocks, modules and circuits of the embodiments. The general-purpose processor is a micro-processor, and alternatively, the processor may be any processor, controller, micro-controller or state machine that can be obtained commercially. The processor may also be the combination of computer equipment, such as the combination of a DSP and a micro-processor, the combination of plural micro-processors, or the combination of a DSP and plural micro-processors.

The steps of the method according to the present invention may be incorporated in the hardware, software modules executed by a processor or the combination of these two directly. The software modules may be stored in a recording medium with any configuration. The examples of the recording medium includes a random access memory (RAM), a read-only memory (ROM), a flash memory, an EPROM memory, an EEPROM memory, a register, a hard disk drive, a removable disk, a CD-ROM, etc. The recording medium may be linked to a processor so that the processor reads information from the recording medium or writes information into the recording medium. Alternatively, the recording medium and the processor may also be a whole apparatus. The software module may be a single command or many commands, and may be distributed in several code segments, different programs or plural recording media.

Steps of the above method may be performed in a time order as above, however the performing sequence is not limited to such a time order. Any steps may be performed in parallel or independently.

The functions may be realized by hardware, software, firmware or any combination thereof. When the function is implemented by software, the function may be stored in a computer-readable medium as one or more commands. The recording medium may be any real medium that can be accessed by a computer. Such a computer-readable medium includes a RAM, a ROM, an EEPROM, a CD-ROM or other laser discs, a magnetic disk or other magnetic memory, or any other real media that carry or store commands, data or program codes and are accessed by the computer. Such a disk and disc include a CD, a laser disc, an optical disc, a DVD disc, a floppy disk and a blue-ray disc, and the disk usually reproduces data by magnetization and the disc reproduces data by a laser.

Thus, the operations may be performed by a computer program product. For example, such a computer program product may be a tangible medium where computer-readable commands are stored (or coded), and the commands may be executed by one or more processors to perform the operation. The computer program product may include packaging material.

The software or commands may also be transmitted by a transmission medium. For example, a coaxial cable, an optical cable, a twisted cable, a digital subscriber line (DSL), or a transmission medium of the wireless technology of infrared, wireless or microwave may be used to transmit the software from a website, a server or another remote source.

Additionally, the modules and/or other appropriate means of the method or technology may be obtained from a user terminal and/or base station, or by other methods. For example, such equipment may be connected to a server so as to perform the transmission of the means of the above method. Alternatively, the methods may be provided via a storage unit (for example, a physical storage medium such as a RAM, a ROM, a CD or a floppy disk), so that the user terminal and/or the base station can obtain the methods when it is connected to the equipment. Furthermore, any other appropriate technology may be provided to the equipment by the method.

The present specification and the appended claims include other examples and implementations. For example, the above functions may be implemented by a processor, hardware, software, firmware, hard-wire or any combination thereof. The features for implementing the functions may be located at any physical location, including being distributed such that a part of the functions may be realized at a different physical location(s). Furthermore, the term "or" before the term "at least one" means a separate enumerating, and for example, "at least one of A, B or C" means (1) A, B or C, (2) AB, AC or BC, or (3) ABC (namely, A and B and C). Additionally, the term "example" does not mean a preferable example or an example superior to other examples.

Various modifications, replacements or combinations may be made without departing from the scope of the present invention by persons skilled in the art. Furthermore, the scope of the present specification and the claims are not limited to the above processing, machine, manufacture, composition of events, means, method and operation. The processing, machine, manufacture, composition of events, means, method and operation with a similar function or a similar result may also be applied to the present invention. Therefore, the scope of the appended claims include such processing, machine, manufacture, composition of events, means, method and operation.

The embodiments have been described above so that persons skilled in the art can implement the present invention. Various modifications to these embodiments will be apparent to persons skilled in the art, and the general principles defined herein may be applied to other aspects without departing from the scope of the present invention which is defined by the claims.

Thus, the present invention is not intended to be limited to the above described embodiments, but rather by the appended claims.

The foregoing has been described for purposes of illustration and understanding. The above description is not intended to limit the embodiments of the present invention. While several embodiments and examples have been described above, variations, modifications, changes, additions, and combinations can be performed by persons skilled in the art, as long as these modifications are covered by the appended claims.

## Claims

1. A method for visual odometry, the method comprising:
capturing a frame image in a stereoscopic video using a capturing device, and obtaining feature points of the frame image and a corresponding disparity map;
obtaining, based on the disparity map, a U-disparity map and a V-disparity map;
**characterized in that** it further comprises:
estimating, using the feature points of the frame image, and feature points of an adjacent frame image adjacent to the frame image or feature points of an interval frame image whose interval between the interval frame image and the frame image is at least one frame, a position and orientation of a second moving object provided with the capturing device;
comparing the estimation result of the position and orientation with motion information of the second moving object provided with the capturing device; and
when the comparison result is greater than a predetermined estimation threshold:
obtaining the first moving object region based on the U-disparity map and the V-disparity map;
removing feature points within the first moving object region from the feature points of the frame image, based on the obtained first moving object region; and
estimating using remaining feature points in the frame image, a position and orientation of the second moving object.

2. The method for visual odometry according to claim 1,
wherein the obtaining of the feature points of the frame image in the stereoscopic video and the corresponding disparity map includes
performing, using the feature points of the frame image, and feature points of an adjacent frame image adjacent to the frame image or feature points of an interval frame image whose interval between the interval frame image and the frame image is at least one frame, matching of the feature points, so as to obtain at least one matched feature point pair, and
the estimating of the position and orientation using the remaining feature points in the frame image includes
estimating, using the matched feature point pair corresponding to the remaining feature points in the frame image, the position and orientation.

3. The method for visual odometry according to claim 1,
wherein the estimating of the position and orientation using the remaining feature points in the frame image includes
performing, using the remaining feature points in the frame image, and feature points of an adjacent frame image adjacent to the frame image or feature points of an interval frame image whose interval between the interval frame image and the frame image is at least one frame, matching of the feature points; and
estimating, using at least one matched feature point pair obtained by the matching, the position and orientation.

4. The method for visual odometry according to claim 1,
wherein the obtaining of the first moving object region based on the U-disparity map and the V-disparity map includes
determining, based on at least one of a width, a height, and an aspect ratio of an object detected from the U-disparity map and the V-disparity map, whether a region where the object is located is the first moving object region.

5. The method for visual odometry according to claim 1,
wherein the obtaining of the first moving object region based on the U-disparity map and the V-disparity map includes
determining, based on the U-disparity map, whether an object existing in the frame image is occluded in the V-disparity map; and
determining, based on at least one of a width, a height, and an aspect ratio of the occluded object, whether a region where the occluded object is located is the first moving object region, when the occluded object exists.

6. The method for visual odometry according to claim 1,
wherein the obtaining of the first moving object region based on the U-disparity map and the V-disparity map includes
comparing at least one of grayscale values and depth values of one or more edge feature points at an edge of the first moving object region with at least one of grayscale values and depth values of one or more adjacent feature points in the first moving object region that are adjacent to the edge feature points; and
updating, using the compared adjacent feature points serving as new edge feature points, the edge feature points, and optimizing, using the updated edge feature points, the first moving object region, when the comparison result satisfies a predetermined comparison threshold.

7. The method for visual odometry according to claim 1,
wherein the estimating of the position and orientation using remaining feature points in the frame image includes
calculating, based on at least one matched feature point pair of the feature points of the frame image, and feature points of an adjacent frame image adjacent to the frame image or feature points of an interval frame image whose interval between the interval frame image and the frame image is at least one frame, a motion estimation matrix, and
the motion estimation matrix includes a rotation matrix and a displacement matrix.

8. An apparatus for visual odometry (500), the apparatus comprising:
an obtaining unit (510) configured to capture a frame image in a stereoscopic video using a capturing device, and obtain feature points of the frame image and a corresponding disparity map;
a disparity calculating unit (520) configured to obtain, based on the disparity map, a U-disparity map and a V-disparity map;
a first moving object region obtaining unit (530) configured to obtain, based on the U-disparity map and the V-disparity map, a first moving object region;
**characterized in that**
the obtaining of the first moving object region based on the U-disparity map and the V-disparity map includes estimating, using the feature points of the frame image, and feature points of an adjacent frame image adjacent to the frame image or feature points of an interval frame image whose interval between the interval frame image and the frame image is at least one frame, a position and orientation of a second moving object provided with the capturing device;
comparing the estimation result of the position and orientation with motion information of the second moving object provided with the capturing device; and
obtaining the first moving object region based on the U-disparity map and the V-disparity map when the comparison result is greater than a predetermined estimation threshold;
the apparatus further comprising:
a feature point removing unit (540) configured to remove feature points within the first moving object region from the feature points of the frame image, based on the obtained first moving object region when the comparison result is greater than the predetermined estimation threshold; and
a position and orientation estimating unit (550) configured to estimate, using remaining feature points in the frame image, a position and orientation of the second moving object when the comparison result is greater than the predetermined estimation threshold.

9. An apparatus for visual odometry (600), the apparatus (600) comprising:
a memory storing computer-readable instructions (620); and
one or more processors (610) configured to execute the computer-readable instructions which cause the one or more processor to :
capture a frame image in a stereoscopic video using a capturing device, and obtain feature points of the frame image and a corresponding disparity map;
obtain, based on the disparity map, a U-disparity map and a V-disparity map;
**characterized in that** the instructions further cause the processor to:
estimate, using the feature points of the frame image, and feature points of an adjacent frame image adjacent to the frame image or feature points of an interval frame image whose interval between the interval frame image and the frame image is at least one frame, a position and orientation of a second moving object provided with the capturing device;
compare the estimation result of the position and orientation with motion information of the second moving object provided with the capturing device; and
when the comparison result is greater than a predetermined estimation threshold:
obtain the first moving object region based on the U-disparity map and the V-disparity map;
remove feature points within the first moving object region from the feature points of the frame image, based on the obtained first moving object region; and
estimate using remaining feature points in the frame image, a position and orientation of the second moving object.

10. A non-transitory computer-readable recording medium having computer-executable instructions for execution by one or more processors, wherein, the computer-executable instructions, when executed, cause the one or more processors to carry out the method of claim 1.

## Patentansprüche

1. Verfahren zur visuellen Odometrie, wobei das Verfahren umfasst:
Erfassen eines Einzelbildes in einem stereoskopischen Video unter Verwendung einer Aufnahmevorrichtung und Erfassen von Merkmalpunkten des Einzelbildes und einer entsprechenden Disparitätskarte;
Erfassen einer U-Disparitätskarte und einer V-Disparitätskarte auf der Grundlage der Disparitätskarte;
**dadurch gekennzeichnet, dass** es ferner umfasst:
unter Verwendung der Merkmalpunkte des Einzelbildes und von Merkmalpunkten eines angrenzenden Einzelbildes, das an das Einzelbild angrenzt, oder von Merkmalpunkten eines Intervall-Einzelbildes, dessen Intervall zwischen dem Intervall-Einzelbild und dem Einzelbild mindestens ein Einzelbild beträgt, erfolgendes Schätzen einer Position und Orientierung eines zweiten sich bewegenden Objekts, das mit der Aufnahmevorrichtung bereitgestellt wird;
Vergleichen des Schätzungsergebnisses der Position und Orientierung mit Bewegungsinformationen des zweiten sich bewegenden Objekts, das mit der Aufnahmevorrichtung bereitgestellt wird; und
wenn das Vergleichsergebnis größer als ein vorbestimmter Schätzungsschwellenwert ist:
Erfassen des ersten sich bewegenden Objektbereichs auf der Grundlage der U-Disparitätskarte und der V-Disparitätskarte;
Entfernen von Merkmalpunkten innerhalb des ersten sich bewegenden Objektbereichs aus den Merkmalpunkten des Einzelbildes auf der Grundlage des erfassten ersten sich bewegenden Objektbereichs; und
Schätzen einer Position und Orientierung des zweiten sich bewegenden Objekts unter Verwendung verbleibender Merkmalpunkte in dem Einzelbild.

2. Verfahren zur visuellen Odometrie nach Anspruch 1,
wobei das Erfassen der Merkmalpunkte des Einzelbildes in dem stereoskopischen Video und der entsprechenden Disparitätskarte Folgendes einschließt:
Durchführen eines Abgleichs der Merkmalpunkte unter Verwendung der Merkmalpunkte des Einzelbildes und von Merkmalpunkten eines an das angrenzende Einzelbild angrenzenden Einzelbildes oder von Merkmalpunkten eines Intervall-Einzelbildes, dessen Intervall zwischen dem Intervall-Einzelbild und dem Einzelbild mindestens ein Einzelbild beträgt, um mindestens ein abgeglichenes Merkmalpunktepaar zu erfassen, und
das Schätzen der Position und Orientierung unter Verwendung der verbleibenden Merkmalpunkte in dem Einzelbild Folgendes einschließt:
Schätzen der Position und Orientierung unter Verwendung des abgeglichenen Merkmalpunktpaars, das den verbleibenden Merkmalpunkten in dem Einzelbild entspricht.

3. Verfahren zur visuellen Odometrie nach Anspruch 1,
wobei das Schätzen der Position und Orientierung unter Verwendung der verbleibenden Merkmalpunkte in dem Einzelbild Folgendes einschließt:
Durchführen eines Abgleichs der Merkmalpunkte unter Verwendung der verbleibenden Merkmalpunkte in dem Einzelbild und von Merkmalpunkten eines an das angrenzende Einzelbild angrenzenden Einzelbildes oder von Merkmalpunkten eines Intervall-Einzelbildes, dessen Intervall zwischen dem Intervall-Einzelbild und dem Einzelbild mindestens ein Einzelbild beträgt; und
Schätzen der Position und Orientierung unter Verwendung von mindestens einem durch den Abgleich erfassten abgeglichenen Merkmalpunktpaar.

4. Verfahren zur visuellen Odometrie nach Anspruch 1,
wobei das Erfassen des ersten sich bewegenden Objektbereichs auf der Grundlage der U-Disparitätskarte und der V-Disparitätskarte Folgendes einschließt:
auf mindestens einem von einer Breite, einer Höhe und einem Seitenverhältnis eines aus der U-Disparitätskarte und der V-Disparitätskarte ermittelten Objekts beruhendes Bestimmen, ob ein Bereich, in dem sich das Objekt befindet, der erste sich bewegende Objektbereich ist.

5. Verfahren zur visuellen Odometrie nach Anspruch 1,
wobei das Ermitteln des ersten sich bewegenden Objektbereichs auf der Grundlage der U-Disparitätskarte und der V-Disparitätskarte Folgendes einschließt:
Bestimmen auf der Grundlage der U-Disparitätskarte, ob ein im Einzelbild vorhandenes Objekt in der V-Disparitätskarte verdeckt ist; und
auf mindestens einem von einer Breite, einer Höhe und einem Seitenverhältnis des verdeckten Objekts beruhendes Bestimmen, ob ein Bereich, in dem sich das verdeckte Objekt befindet, der erste sich bewegende Objektbereich ist, wenn das verdeckte Objekt existiert.

6. Verfahren zur visuellen Odometrie nach Anspruch 1,
wobei das Ermitteln des ersten sich bewegenden Objektbereichs auf der Grundlage der U-Disparitätskarte und der V-Disparitätskarte Folgendes einschließt:
Vergleichen von mindestens einem von Graustufenwerten und Tiefenwerten von einem oder mehreren Rand-Merkmalpunkten an einem Rand des ersten sich bewegenden Objektbereichs mit mindestens einem von Graustufenwerten und Tiefenwerten von einem oder mehreren angrenzenden Merkmalpunkten in dem ersten sich bewegenden Objektbereich, die an die Rand-Merkmalpunkte angrenzen; und
Aktualisieren der Rand-Merkmalpunkte unter Verwendung der verglichenen angrenzenden Merkmalpunkte, die als neue Rand-Merkmalpunkte dienen, und Optimieren des ersten sich bewegenden Objektbereichs unter Verwendung der aktualisierten Rand-Merkmalpunkte, wenn das Vergleichsergebnis einen vorgegebenen Vergleichsschwellenwert erfüllt.

7. Verfahren zur visuellen Odometrie nach Anspruch 1,
wobei das Schätzen der Position und Orientierung unter Verwendung der verbleibenden Merkmalpunkte in dem Einzelbild Folgendes einschließt:
Berechnen einer Bewegungsschätzungsmatrix auf der Grundlage von mindestens einem abgeglichenen Merkmalpunktepaar der Merkmalpunkte des Einzelbildes und von Merkmalpunkten eines an das angrenzende Einzelbild angrenzenden Einzelbildes oder von Merkmalpunkten eines Intervall-Einzelbildes, dessen Intervall zwischen dem Intervall-Einzelbild und dem Einzelbild mindestens ein Einzelbild beträgt, und
wobei die Bewegungsschätzungsmatrix eine Rotationsmatrix und eine Verschiebungsmatrix einschließt.

8. Vorrichtung zur visuellen Odometrie (500), wobei die Vorrichtung Folgendes umfasst:
eine Erfassungseinheit (510), die dafür konfiguriert ist, ein Einzelbild in einem stereoskopischen Video unter Verwendung einer Aufnahmevorrichtung aufzunehmen und Merkmalpunkte des Einzelbildes und eine entsprechende Disparitätskarte zu erfassen;
eine Disparitätsberechnungseinheit (520), die dafür konfiguriert ist, auf der Grundlage der Disparitätskarte eine U-Disparitätskarte und eine V-Disparitätskarte zu erfassen;
eine Einheit (530) zum Erfassen eines ersten sich bewegenden Objektbereichs, die dafür konfiguriert ist, auf der Grundlage der U-Disparitätskarte und der V-Disparitätskarte einen ersten sich bewegenden Objektbereich zu erfassen;
**dadurch gekennzeichnet, dass** das Erfassen des ersten sich bewegenden Objektbereichs auf der Grundlage der U-Disparitätskarte und der V-Disparitätskarte Folgendes einschließt:
unter Verwendung der Merkmalpunkte des Einzelbildes und von Merkmalpunkten eines angrenzenden Einzelbildes, das an das Einzelbild angrenzt, oder von Merkmalpunkten eines Intervall-Einzelbildes, dessen Intervall zwischen dem Intervall-Einzelbild und dem Einzelbild mindestens ein Einzelbild beträgt, erfolgendes Schätzen einer Position und Orientierung eines zweiten sich bewegenden Objekts, das mit der Aufnahmevorrichtung bereitgestellt wird;
Vergleichen des Schätzungsergebnisses der Position und Orientierung mit Bewegungsinformation des zweiten sich bewegenden Objekts, das mit der Aufnahmevorrichtung bereitgestellt wird; und
Erfassen des Bereichs des ersten sich bewegenden Objekts auf der Grundlage der U-Disparitätskarte und der V-Disparitätskarte, wenn das Vergleichsergebnis größer als ein vorbestimmter Schätzungsschwellenwert ist;
wobei die Vorrichtung ferner umfasst:
eine Merkmalpunkt-Entfernungseinheit (540), die dafür konfiguriert ist, auf der Grundlage des erfassten ersten sich bewegenden Objektbereichs Merkmalpunkte innerhalb des ersten sich bewegenden Objektbereichs aus den Merkmalpunkten des Einzelbildes zu entfernen, wenn das Vergleichsergebnis größer als der vorbestimmte Schätzschwellenwert ist; und
eine Positions- und Orientierungsschätzeinheit (550), die dafür konfiguriert ist, unter Verwendung verbleibender Merkmalpunkte in dem Einzelbild eine Position und Orientierung des zweiten sich bewegenden Objekts zu schätzen, wenn das Vergleichsergebnis größer als der vorbestimmte Schätzschwellenwert ist.

9. Vorrichtung zur visuellen Odometrie (600), wobei die Vorrichtung (600) Folgendes umfasst:
einen Speicher, der computerlesbare Anweisungen (620) speichert; und
einen oder mehrere Prozessoren (610), die dafür konfiguriert sind, die computerlesbaren Anweisungen auszuführen, die den einen oder die mehreren Prozessoren dazu veranlassen:
ein Einzelbild in einem stereoskopischen Video unter Verwendung einer Aufnahmevorrichtung zu erfassen und Merkmalpunkte des Einzelbildes und einer entsprechenden Disparitätskarte zu erfassen;
auf der Grundlage der Disparitätskarte eine U-Disparitätskarte und eine V-Disparitätskarte zu erfassen;
**dadurch gekennzeichnet, dass** die Anweisungen ferner den Prozessor dazu veranlassen:
unter Verwendung der Merkmalpunkte des Einzelbildes und von Merkmalpunkten eines angrenzenden Einzelbildes, das an das Einzelbild angrenzt, oder von Merkmalpunkten eines Intervall-Einzelbildes, dessen Intervall zwischen dem Intervall-Einzelbild und dem Einzelbild mindestens ein Einzelbild beträgt, eine Position und Orientierung eines zweiten sich bewegenden Objekts, das mit der Aufnahmevorrichtung bereitgestellt wird, zu schätzen;
das Schätzungsergebnis der Position und Orientierung mit Bewegungsinformationen des zweiten sich bewegenden Objekts, das mit der Aufnahmevorrichtung bereitgestellt wird, zu vergleichen; und
wenn das Vergleichsergebnis größer als ein vorbestimmter Schätzungsschwellenwert ist:
auf der Grundlage der U-Disparitätskarte und der V-Disparitätskarte den ersten sich bewegenden Objektbereich zu erlangen;
auf der Grundlage des erfassten ersten sich bewegenden Objektbereichs Merkmalpunkte innerhalb des ersten sich bewegenden Objektbereichs aus den Merkmalpunkten des Einzelbildes zu entfernen; und
unter Verwendung der verbleibenden Merkmalpunkte in dem Einzelbild eine Position und Orientierung des zweiten sich bewegenden Objekts zu schätzen.

10. Nichtflüchtiges, computerlesbares Aufzeichnungsmedium mit computerausführbaren Anweisungen zur Ausführung durch einen oder mehrere Prozessoren, wobei die computerausführbaren Anweisungen, wenn sie ausgeführt werden, den einen oder die mehreren Prozessoren veranlassen, das Verfahren nach Anspruch 1 auszuführen.

## Revendications

1. Procédé pour l'odométrie visuelle, le procédé comprenant:
la capture d'une image de photogramme dans une vidéo stéréoscopique en utilisant un dispositif de capture, et l'obtention de points de caractéristique de l'image de photogramme et d'une carte de disparités correspondante;
l'obtention, sur la base de la carte de disparités, d'une carte de disparités U et d'une carte de disparités V;
**caractérisé en ce qu'**il comprend en outre:
l'estimation, en utilisant les points de caractéristique de l'image de photogramme et les points de caractéristique d'une image de photogramme adjacente qui est adjacente à l'image de photogramme ou les points de caractéristique d'une image de photogramme d'intervalle pour laquelle l'intervalle entre l'image de photogramme d'intervalle et l'image de photogramme est d'au moins un photogramme, d'une position et d'une orientation d'un second objet mobile qui est muni du dispositif de capture;
la comparaison du résultat d'estimation de la position et de l'orientation avec des informations de déplacement du second objet mobile qui est muni du dispositif de capture; et
lorsque le résultat de comparaison est supérieur à un seuil d'estimation prédéterminé:
l'obtention de la région de premier objet mobile sur la base de la carte de disparités U et de la carte de disparités V;
la suppression de points de caractéristique à l'intérieur de la région de premier objet mobile par rapport aux points de caractéristique de l'image de photogramme, sur la base de la région de premier objet mobile obtenue; et
l'estimation, en utilisant les points de caractéristique restants dans l'image de photogramme, d'une position et d'une orientation du second objet mobile.

2. Procédé pour l'odométrie visuelle selon la revendication 1,
dans lequel l'obtention des points de caractéristique de l'image de photogramme dans la vidéo stéréoscopique et de la carte de disparités correspondante inclut:
la réalisation, en utilisant les points de caractéristique de l'image de photogramme et les points de caractéristique d'une image de photogramme adjacente qui est adjacente à l'image de photogramme ou les points de caractéristique d'une image de photogramme d'intervalle pour laquelle l'intervalle entre l'image de photogramme d'intervalle et l'image de photogramme est d'au moins un photogramme, d'une mise en concordance des points de caractéristique, de manière à obtenir au moins une paire de points de caractéristique en concordance; et
l'estimation de la position et de l'orientation en utilisant les points de caractéristique restants dans l'image de photogramme inclut:
l'estimation, en utilisant la paire de points de caractéristique en concordance correspondant aux points de caractéristique restants dans le photogramme, de la position et de l'orientation.

3. Procédé pour l'odométrie visuelle selon la revendication 1,
dans lequel l'estimation de la position et de l'orientation en utilisant les points de caractéristique restants dans l'image de photogramme inclut:
la réalisation, en utilisant les points de caractéristique restants dans l'image de photogramme et les points de caractéristique d'une image de photogramme adjacente qui est adjacente à l'image de photogramme ou les points de caractéristique d'une image de photogramme d'intervalle pour laquelle l'intervalle entre l'image de photogramme d'intervalle et l'image de photogramme est d'au moins un photogramme, d'une mise en concordance des points de caractéristique; et
l'estimation, en utilisant au moins une paire de points de caractéristique en concordance, de la position et de l'orientation.

4. Procédé pour l'odométrie visuelle selon la revendication 1,
dans lequel l'obtention de la région de premier objet mobile sur la base de la carte de disparités U et de la carte de disparités V inclut:
la détermination, sur la base d'au moins un parmi une largeur, une hauteur et un rapport d'aspect d'un objet qui est détecté à partir de la carte de disparités U et de la carte de disparités V, si une région au niveau de laquelle l'objet est localisé est la région de premier objet mobile.

5. Procédé pour l'odométrie visuelle selon la revendication 1,
dans lequel l'obtention de la région de premier objet mobile sur la base de la carte de disparités U et de la carte de disparités V inclut:
la détermination, sur la base de la carte de disparités U, si un objet qui existe dans l'image de photogramme est occlus dans la carte de disparités V; et
la détermination, sur la base d'au moins un parmi une largeur, une hauteur et un rapport d'aspect de l'objet occlus, si une région au niveau de laquelle l'objet occlus est localisé est la région de premier objet mobile, lorsque l'objet occlus existe.

6. Procédé pour l'odométrie visuelle selon la revendication 1,
dans lequel l'obtention de la région de premier objet mobile sur la base de la carte de disparités U et de la carte de disparités V inclut:
la comparaison d'au moins l'une de valeurs d'échelle de gris et de valeurs de profondeur d'un ou de plusieurs points de caractéristique de bord au niveau d'un bord de la région de premier objet mobile avec au moins l'une de valeurs d'échelle de gris et de valeurs de profondeur d'un ou de plusieurs points de caractéristique adjacents dans la région de premier objet mobile qui sont adjacents aux points de caractéristique de bord; et
la mise à jour, en utilisant les points de caractéristique adjacents comparés qui jouent le rôle de nouveaux points de caractéristique de bord, des points de caractéristique de bord, et l'optimisation, en utilisant les points de caractéristique de bord mis à jour, de la région de premier objet mobile, lorsque le résultat de comparaison satisfait un seuil de comparaison prédéterminé.

7. Procédé pour l'odométrie visuelle selon la revendication 1,
dans lequel l'estimation de la position et de l'orientation en utilisant les points de caractéristique restants dans l'image de photogramme inclut:
le calcul, sur la base d'au moins une paire de points de caractéristique en concordance des points de caractéristique de l'image de photogramme et de points de caractéristique d'une image de photogramme adjacente qui est adjacente à l'image de photogramme ou de points de caractéristique d'une image de photogramme d'intervalle pour laquelle l'intervalle entre l'image de photogramme d'intervalle et l'image de photogramme est d'au moins un photogramme, d'une matrice d'estimation de déplacement; et
la matrice d'estimation de déplacement inclut une matrice de rotation et une matrice de déplacement.

8. Appareil pour l'odométrie visuelle (500), l'appareil comprenant:
une unité d'obtention (510) qui est configurée pour capturer une image de photogramme dans une vidéo stéréoscopique en utilisant un dispositif de capture et pour obtenir des points de caractéristique de l'image de photogramme et une carte de disparités correspondante;
une unité de calcul de disparités (520) qui est configurée pour obtenir, sur la base de la carte de disparités, une carte de disparités U et une carte de disparités V;
une unité d'obtention de région de premier objet mobile (530) qui est configurée pour obtenir, sur la base de la carte de disparités U et de la carte de disparités V, une région de premier objet mobile;
**caractérisé en ce que** l'obtention de la région de premier objet mobile sur la base de la carte de disparités U et de la carte de disparités V inclut:
l'estimation, en utilisant les points de caractéristique de l'image de photogramme et les points de caractéristique d'une image de photogramme adjacente qui est adjacente à l'image de photogramme ou les points de caractéristique d'une image de photogramme d'intervalle pour laquelle l'intervalle entre l'image de photogramme d'intervalle et l'image de photogramme est d'au moins un photogramme, d'une position et d'une orientation d'un second objet mobile qui est muni du dispositif de capture;
la comparaison du résultat d'estimation de la position et de l'orientation avec une information de déplacement du second objet mobile qui est muni du dispositif de capture; et
l'obtention de la région de premier objet mobile sur la base de la carte de disparités U et de la carte de disparités V lorsque le résultat de comparaison est supérieur à un seuil d'estimation prédéterminé;
l'appareil comprenant en outre:
une unité de suppression de points de caractéristique (540) qui est configurée pour supprimer des points de caractéristique à l'intérieur de la région de premier objet mobile par rapport aux points de caractéristique de l'image de photogramme, sur la base de la région de premier objet mobile obtenue lorsque le résultat de comparaison est supérieur au seuil d'estimation prédéterminé; et
une unité d'estimation de position et d'orientation (550) qui est configurée pour estimer, en utilisant les points de caractéristique restants dans l'image de photogramme, une position et une orientation du second objet mobile lorsque le résultat de comparaison est supérieur au seuil d'estimation prédéterminé.

9. Appareil pour l'odométrie visuelle (600), l'appareil (600) comprenant:
une mémoire qui stocke des instructions pouvant être lues par un ordinateur (620); et
un ou plusieurs processeurs (610) qui sont configurés pour exécuter les instructions pouvant être lues par un ordinateur, lesquelles instructions amènent les un ou plusieurs processeurs à:
capturer une image de photogramme dans une vidéo stéréoscopique en utilisant un dispositif de capture, et obtenir des points de caractéristique de l'image de photogramme et une carte de disparités correspondante;
obtenir, sur la base de la carte de disparités, une carte de disparités U et une carte de disparités V;
**caractérisé en ce que** les instructions amènent en outre le processeur à:
estimer, en utilisant les points de caractéristique de l'image de photogramme et les points de caractéristique d'une image de photogramme adjacente qui est adjacente à l'image de photogramme ou les points de caractéristique d'une image de photogramme d'intervalle pour laquelle l'intervalle entre l'image de photogramme d'intervalle et l'image de photogramme est d'au moins un photogramme, une position et une orientation d'un second objet mobile qui est muni du dispositif de capture;
comparer le résultat d'estimation de la position et de l'orientation avec des informations de déplacement du second objet mobile qui est muni du dispositif de capture; et
lorsque le résultat de comparaison est supérieur à un seuil d'estimation prédéterminé:
obtenir la région de premier objet mobile sur la base de la carte de disparités U et de la carte de disparités V;
supprimer des points de caractéristique à l'intérieur de la région de premier objet mobile par rapport aux points de caractéristique de l'image de photogramme, sur la base de la région de premier objet mobile obtenue; et
estimer, en utilisant les points de caractéristique restants dans l'image de photogramme, une position et une orientation du second objet mobile.

10. Support d'enregistrement non transitoire pouvant être lu par un ordinateur comportant des instructions pouvant être exécutées par un ordinateur qui sont destinées à être exécutées par un ou plusieurs processeurs, dans lequel, les instructions pouvant être exécutées par un ordinateur, lorsqu'elles sont exécutées, amènent les un ou plusieurs processeurs à mettre en œuvre le procédé selon la revendication 1.
